(19) Europäisches Patentamt
European Patent Office
Office européen des brevets

(11) Veröffentlichungsnummer: **0 039 324**
**B1**

(12) # EUROPÄISCHE PATENTSCHRIFT

(45) Veröffentlichungstag der Patentschrift: **18.07.84**

(51) Int. Cl.³: **C 01 F 11/22**

(21) Anmeldenummer: **81890070.6**

(22) Anmeldetag: **23.04.81**

(54) **Verfahren zur Aufarbeitung von beim Nassaufschluss von Phosphaten anfallender Kieselfluorwasserstoffsäure sowie Einrichtung zur Durchführung des Verfahrens.**

(30) Priorität: **30.04.80 AT 2307/80**

(43) Veröffentlichungstag der Anmeldung: **04.11.81 Patentblatt 81/44**

(45) Bekanntmachung des Hinweises auf die Patenterteilung: **18.07.84 Patentblatt 84/29**

(84) Benannte Vertragsstaaten: **BE CH DE FR GB IT LI LU NL SE**

(56) Entgegenhaltungen:
**DE - A - 2 257 948**
**DE - A - 2 307 925**
**DE - A - 2 509 375**
**DE - A - 2 533 128**
**DE - A - 2 535 658**
**GB - A - 1 239 078**

(73) Patentinhaber: **VOEST-ALPINE Aktiengesellschaft, Werksgelände, A-4010 Linz (AT)**

(72) Erfinder: **Kepplinger, Werner Leopold, Dipl.-Ing., Lahholdstrasse 7, A-4020 Linz-Hart (AT)**
Erfinder: **Madlsperger, Gerhard, Dipl.-Ing., Waldeggstrasse 109, A-4020 Linz (AT)**

(74) Vertreter: **Wolfram, Gustav, Dipl.-Ing., Schwindgasse 7 P.O. Box 205, A-1041 Wien (AT)**

**EP 0 039 324 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

**Beschreibung**

Die Erfindung betrifft ein Verfahren zur Aufarbeitung von beim Naßaufschluß von Phosphaten anfallender Kieselfluorwasserstoffsäure durch Behandeln von silicofluoridhältigen Waschwässern mit feinteiligem $CaCO_3$ (Kalk), und eine Einrichtung zur Durchführung des Verfahrens.

Beim Aufschluß von Phosphaten entstehen durchwegs größere Mengen an $H_2SiF_6$. Diese Säure ist sehr aggressiv gegenüber herkömmlichen Werkstoffen und Glas und zeigt gegenüber pflanzlichen und tierischen Lebewesen relativ starke toxische Wirkung.

Die silicofluoridhältigen Abwässer entstehen dadurch, daß beim Aufschluß von Apatit aus dem in diesem Mineral enthaltenen Calciumfluorid mit Schwefelsäure gasförmiger Fluorwasserstoff gebildet wird, der sofort mit der im Roh-Apatit gleichfalls enthaltenen Kieselsäure zu Siliciumtetrafluorid umgesetzt wird, welches mit Wasser ausgewaschen wird. Durch Auswaschen mit Wasser entstehen Kieselfluorwasserstoffsäure und ausgefällte Kieselsäure.

Es wurde versucht, diese Waschwässer durch Zusatz von Natronlauge im Überschuß unschädlich zu machen, wobei sich $Na_2SiF_6$ bildet. Dies ist aber kein zufriedenstellender Weg für die Aufarbeitung, weil die Natriumverbindung nicht unbeträchtlich wasserlöslich ist und daher das Abwasser nicht rein genug wird, um es in den Vorfluter ablassen zu können.

Man hat deshalb auch bereits vorgeschlagen, die Aufarbeitung der kieselfluorwasserstoffsäurehältigen Waschwässer stufenweise durchzuführen, indem in der ersten Stufe durch Auflösen von Aluminiumoxid bzw. Aluminiumoxid-Hydrat Aluminiumfluorid hergestellt wurde, dessen $\beta$-Modifikation in Wasser schwer löslich ist. Die Reaktion geht aber nicht vollständig vor sich, sondern es werden nur 75 bis 80% des im Waschwasser enthaltenen Fluors entfernt. Die restliche Menge wird mit der Mutterlauge ausgetragen und stellt weiterhin ein Umweltproblem dar, weshalb die Aufarbeitung dieser Mutterlaugen, die noch einen Gehalt von etwa 2% Fluor aufweisen, etwa gemäß der DE-AS 2 509 375, notwendig ist. Die dort beschriebene Aufarbeitung der Mutterlaugen ist an sich wieder mehrstufig, und zwar Fällung, Abscheidung, Calcination und Kompaktierung. Zur Fällung wird beispielsweise Calciumoxid oder Calciumhydroxid verwendet. Diese Substanzen müssen jedoch durch hohen Aufwand an thermischer Energie aus Kalkstein gewonnen werden. Ein solcher mehrstufiger Prozeß ist daher aufwendig und für kleinere Aufarbeitungsanlagen ungeeignet. Die kompaktierten Produkte enthalten darüber hinaus einen gewissen Anteil von Fremdstoffen, wie Bindemittel und Erdalkalimetalle, welcher nicht immer wünschenswert ist.

Aus der DE-A-2 533 128 ist weiters ein Verfahren zur Herstellung eines siliciumdioxidarmen, synthetischen Flußspates bekannt, wobei eine bessere Filtrierbarkeit des Reaktionsgemisches aus $H_2SiF_6$ und $CaCO_3$ zwecks Abtrennung des entstandenen Calciumfluorides angestrebt wird. Dies wird durch Einhaltung eines pH-Wertes der ausreagierten Lösung von 3,6 bis 4,6, Zugabe des $CaCO_3$ in Form einer wäßrigen Suspension und vorzugsweise in geringem stöchiometrischen Unterschuß und durch Zusatz schnell reagierender Protonenakzeptoren zum Reaktionsgemisch unmittelbar vor Abtrennung des $CaF_2$ erreicht. Nach der DE-A-2 533 128 wird also $CaF_2$ ausgefällt, wobei $SiO_2$ als Gel zurückbleibt und abgetrennt wird. Das Abwasser bzw. das gelierende Kieselsol enthält aber doch noch Spuren löslicher Fluorverbindungen.

Die Erfindung bezweckt die Vermeidung der geschilderten Schwierigkeiten und Nachteile und stellt sich die Aufgabe, ein einfach durchführbares einstufiges Verfahren zu schaffen, bei welchem die beim Phosphataufschluß anfallenden, Kieselfluorwasserstoff- und Flußsäure enthaltenden Abwässer in einem Arbeitsgang aufgearbeitet und zu einem festen Reaktionsprodukt verarbeitet werden können. Weiters bezweckt die Erfindung, das Aufarbeitungsprodukt direkt industriell für andere Anwendungsgebiete nutzbar machen zu können.

Diese Aufgabe wird erfindungsgemäß dadurch gelöst, daß Waschwässer mit einem Gehalt an Silicofluoriden von mindestens 20% Masse, vorzugsweise zwischen 24 und 30%, gerechnet als $H_2SiF_6$, umgesetzt werden, wobei $CaCO_3$ zu $SiF_6^{2\ominus}$-Ionen in einem Molverhältnis von 3,3 : 1 bis 5 : 1, vorzugsweise 3,9 : 1, eingesetzt wird und das erhaltene pastenförmige Reaktionsgemisch zu fester Konsistenz erhärten gelassen wird.

Das eingesetzte $CaCO_3$ weist zweckmäßig eine Korngröße von weniger als 0,8 mm, vorzugsweise von weniger als 0,4 mm, auf.

Die Erfindung umfaßt weiters eine Einrichtung zur Durchführung des Verfahrens, gekennzeichnet durch einen sich nach oben konisch erweiternden Reaktionsbehälter mit Zuführungen für feinteiliges Calciumcarbonat und silicofluoridhältiges Waschwasser, in dem ein Rührwerk im Bodenbereich und ein Schaumzerstörer im oberen Teil auf einer zentralen Welle angeordnet sind, einen im Bodenbereich mündenden Austragskanal mit einer Fördervorrichtung für das im Reaktionsbehälter anfallende pastenartige Material, wobei die Länge des Austragskanals vorzugsweise so bemessen ist, daß das ausgetragene Gut während seines Transportes durch den Kanal zu einem Granulat erhärtet.

Vorzugsweise verläuft der Austragskanal gegenüber der Horizontalen ansteigend und liegt seine Austragsöffnung oberhalb des Flüssigkeitsspiegels im Reaktionsbehälter.

In der Zeichnung ist eine Ausführungsform der erfindungsgemäßen Einrichtung dargestellt. In einem konischen Reaktionsbehälter 1 ist zentral eine motorbetriebene Rührwelle 2 vorgesehen. Zuführungen für Kalk und silicofluoridhältiges Waschwasser 3 und 4 münden in den oberen Teil des Reaktionsbehälters. Im Bodenbereich des Behälters sind an der Welle 2 ein beispielsweise als Paddelrührer ausgebildetes Rührwerk 5 und im Bereich oberhalb des Flüssigkeitsspiegels 6 ein Schaumzerstörer 7 angeordnet. Vom Bodenbereich des Behälters 1 führt ein Austragskanal 8 ansteigend gegenüber der Horizontalen weg. Als Förderorgan ist in dem Kanal 8 eine motorbetriebene Förderschnecke 9 vorgesehen, welche das Reaktionsprodukt in Richtung der Austragsöffnung 10 transportiert.

Nach Vereinigung der silicofluoridhältigen Waschwässer mit dem Calciumcarbonat verläuft die Reaktion zunächst recht heftig unter $CO_2$-Entwicklung im wesentlichen gemäß der Gleichung

$$H_2SiF_6 + 3CaCO_3 \rightarrow 3CaF_2 + SiO_2 + H_2O + 3CO_2$$

Ein Überquellen des entstehenden lockeren Schaumes läßt sich durch entsprechende Formgebung des Reaktionsbehälters und mittels des Schaumzerstörers leicht vermeiden. Es ist möglich, das $CaCO_3$ in relativ grob gemahlenem Zustand, nämlich mit einer Korngröße von etwa 0,2 bis 0,4 mm, einzusetzen, da die Umsetzung nicht nur an der Oberfläche der Körnchen stattfindet, sondern eine einige Zehntelmillimeter dicke Schicht miteinbezogen wird.

Das vorerst flüssige Reaktionsgemisch verfestigt sich bei einer Temperatur von 20°C innerhalb einiger Minuten nach Durchlaufen eines Zustandes pastenartiger, klebriger Konsistenz zu einem festen, nahezu trockenen Kuchen, welcher sich wenigstens während einer Zeitspanne von 15 Minuten nach Entstehung leicht zerteilen läßt. Die Verfestigung beruht insbesondere auf Hydratbildung der entstandenen Kieselsäure.

Die Zufuhrgeschwindigkeit des Neutralisationsmittels und der Waschwässer, die Verweilzeit des Gemisches im Reaktionsbehälter sowie die Länge des Austragskanals kann so gewählt werden, daß das die Austragsöffnung 10 verlassende Produkt bereits in festem Zustand anfällt.

Die verwendete Kalksorte übt keinen entscheidenden Einfluß auf das erfindungsgemäße Verfahren aus. So wurden nigerianisches Kalkgestein mit $CaCO_3$-Gehalt von 90 bzw. 98% Masse, österreichischer Naturkalk sowie industriell erzeugter, besonders feinteiliger Umsatzkalk für Versuchszwecke verwendet und kein wesentlicher Qualitätsunterschied bei den resultierenden Reaktionsprodukten festgestellt.

In der folgenden Tabelle sind Ergebnisse von Versuchen über den Umsetzungsgrad zusammengestellt, welche mit Kalk verschiedener Korngröße und bei verschiedenen Molverhältnissen von $CaCO_3$ zu $H_2SiF_6$ bei Raumtemperatur erhalten wurden. Das Reaktionsprodukt wurde zu diesem Zweck in Wasser aufgeschlämmt und der Gehalt des Filtrates an $H_2SiF_6$ durch Titration mit NaOH gegen Methylorange, der Gehalt des Filtrates an $CaSiF_6$ durch Titration mit NaOH gegen Phenolphthalein bei Siedetemperatur bestimmt. Die Summe der so ermittelten Mengen an wasserlöslichen Fluorverbindungen wurden in % Masse Fluor des festen Reaktionskuchens angegeben. Die für die Versuche eingesetzten Waschwässer wiesen einen Gehalt von 26% Masse an Hexafluorokieselsäure auf.

| Kalk-Korngröße [mm] | Molverhältnis $CaCO_3 : H_2SiF_6$ | wasserlösliche Fluorverbindungen; Fluor [% Masse] |
|---|---|---|
| <0,8 | 4,3 | 12 |
| <0,4 | 4,3 | 3 |
| <0,25 | 4,3 | 2 |
| Umsatzkalk | 4,3 | 1 |
| <0,8 | 3,6 | 26 |
| <0,25 | 3,6 | 10 |

Das nach dem erfindungsgemäßen Verfahren erhaltene granulierte Reaktionsprodukt ist gut lager- und transportfähig, ungiftig und praktisch wasserunlöslich. Es ist ohne Umweltbelastung im Freien auf Halden lagerbar und kann als Zusatzmittel in der Bauindustrie verwendet werden. Der Flußspaltgehalt der Produkte beträgt bis zu etwa 80% Masse und macht diese auch für die metallurgische Industrie als Substitutionsprodukte für Hüttenspat interessant.

Mit dem erfindungsgemäßen Verfahren und der erfindungsgemäßen Einrichtung ist es somit möglich, anfallende Kieselfluorwasserstoffsäure schnell und mit hohem Wirkungsgrad umzusetzen; es bilden sich praktisch keine umweltschädigenden Nebenprodukte und das Umsetzungsprodukt ist industriell verwertbar.

**Patentansprüche**

1. Verfahren zur Aufarbeitung von beim Naßaufschluß von Phosphaten anfallender Kieselfluorwasserstoffsäure durch Behandeln von silicofluoridhältigen Waschwässern mit feinteiligem $CaCO_3$, dadurch gekennzeichnet, daß Waschwässer mit einem Gehalt an Silicofluoriden von mindestens 20% Masse, vorzugsweise zwischen 24 und 30%, gerechnet als $H_2SiF_6$, umgesetzt werden, wobei $CaCO_3$ zu $SiF_6^{2\ominus}$-Ionen in einem Molverhältnis von 3,3 : 1 bis 5 : 1, vorzugsweise 3,9 : 1, eingesetzt wird und das erhaltene pastenförmige Reaktionsgemisch zu fester Konsistenz erhärten gelassen wird.

2. Verfahren nach Anspruch 1, dadurch gekennzeichnet, daß $CaCO_3$ mit einer Korngröße von weniger als 0,8 mm, vorzugsweise von weniger als 0,4 mm, eingesetzt wird.

3. Einrichtung zur Durchführung des Verfahrens nach den Ansprüchen 1 und 2, gekennzeichnet durch einen sich nach oben konisch erweiternden Reaktionsbehälter (1) mit Zuführungen für feinteiliges Calciumcarbonat und silicofluoridhältiges Waschwasser (3, 4), in dem ein Rührwerk (5) im Bodenbereich und ein Schaumzerstörer (7) im oberen Teil auf einer zentralen Welle (2) angeordnet sind, einen im Bodenbereich mündenden Austragskanal (8) mit einer Fördervorrichtung (9) für das im Reaktionsbehälter anfallende pastenartige Material, wobei die Länge des Austragskanales vorzugsweise so bemessen ist, daß das ausgetragene Gut während seines Transportes durch den Kanal zu einem Granulat erhärtet.

4. Einrichtung nach Anspruch 3, dadurch gekennzeichnet, daß der Austragskanal (8) gegenüber der Horizontalen ansteigend verläuft und seine Austragsöffnung (10) oberhalb des Flüssigkeitsspiegels (6) im Reaktionsbehälter liegt.

**Claims**

1. A method of processing hydrosilicofluoric acid resulting during the wet decomposition of phosphates, by treating silicofluoride-containing washings with fine-particle $CaCO_3$, characterized in that washings with a content of silicofluorides of at least 20% by mass, preferably between 24 and 30%, calculated as $H_2SiF_6$, are reacted, with $CaCO_3$ to $SiF_6^{2\ominus}$ ions at a molar ratio of from 3.3 : 1 to 5 : 1, preferably 3.9 : 1, being used and the paste-like reaction mixture obtained is allowed to solidify into a solid consistency.

2. A method according to claim 1, characterized in that $CaCO_3$ having a grain size of less than 0.8 mm, preferably of less than 0.4 mm, is used.

3. An arrangement for carrying out the method according to claims 1 and 2, characterized by a reaction vessel (1) widening conically upwardly and including feedings for fine-particle calcium carbonate and silicofluoride-containing washings (3, 4), in which an agitator (5) is arranged in the bottom region and a foam destroyer (7) is arranged in the upper region, on said central shaft (2), by a discharge channel (8) entering in the bottom region and including a conveying means (9) for the paste-like material forming in the reaction vessel, the length of the discharge channel preferably being dimensioned such that the discharged stock solidifies into a granulate during its transportation through the channel.

4. An arrangement according to claim 3, characterized in that the discharge channel (8) extends in an ascending manner relative to the horizontal and its discharge opening (10) lies above the liquid level (6) in the reaction vessel.

**Revendications**

1. Procédé de traitement d'acide silicofluorhydrique résultant de la préparation des phosphates par voie humide, qui opère par traitement des eaux de lavage contenant des silicofluorures au moyen de $CaCO_3$ finement divisée et étant caractérisé en ce qu'on transforme les eaux de lavage, possédant une teneur en silicofluorure d'au moins 20% en masse, de préférence comprise entre 24 et 30%, calculée en $H_2SiF_6$, en ajoutant $CaCO_3$ dans un rapport molaire de 3,3 : 1 à 5 : 1, de préférence de 3,9 : 1 relativement aux ions $SiF_2^{2-}$ et en laissant durcir le mélange réactionnel pâteux obtenu jusqu'à ce qu'il prenne une consistance solide.

2. Procédé selon la revendication 1, caractérisé en ce qu'on introduit $CaCO_3$ avec une grosseur de grain de moins de 0,8 mm, de préférence de moins de 0,4 mm.

3. Dispositif pour la mise en œuvre du procédé selon les revendications 1 et 2, caractérisé par une cuve de réaction (1) qui s'élargit vers le haut avec une forme conique, équipée d'arrivées pour le carbonate de calcium finement divisé et l'eau de lavage contenant des silicofluorures (3, 4), et dans laquelle sont montés, sur un arbre central (2), un agitateur (5) situé dans la région du fond et un destructeur de mousse (7) situé dans la région supérieure , un canal de déchargement (8) qui débouche dans la région du fond et est muni d'un dispositif transporteur (9) pour la matière pâteuse qui se forme dans la cuve de réaction, la longueur du canal de déchargement étant de préférence calculée de manière que le produit déchargé se durcisse en se transformant en granulé pendant son transport

dans le canal.

4. Dispositif selon la revendication 3, caractérisé en ce que le canal de déchargement (8) s'étend en pente montante par rapport à l'horizontale et que son ouverture de déchargement (10) se trouve au-dessus du niveau de la surface libre (6) du liquide contenu dans la cuve de réaction.

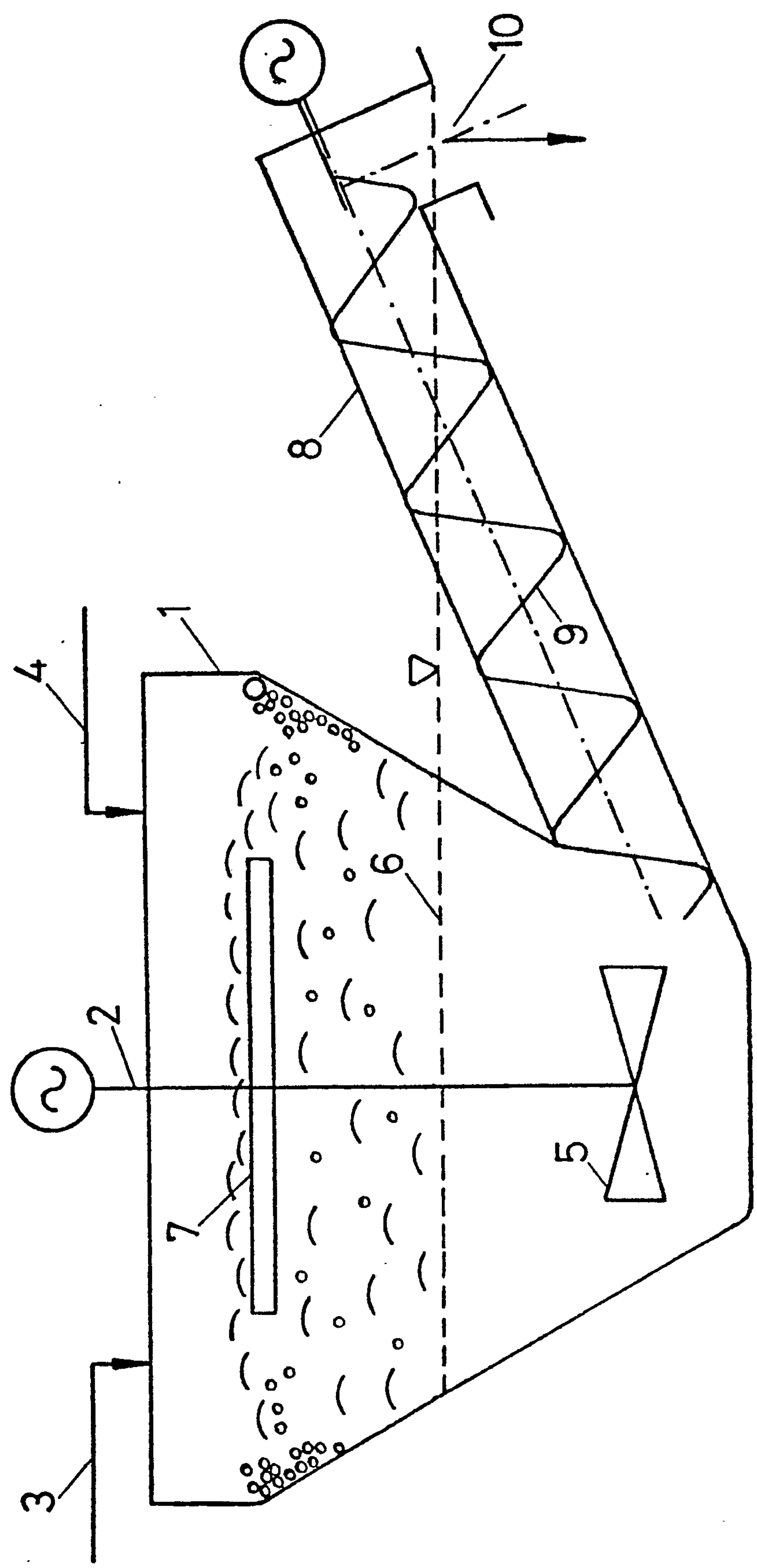
1
2
3
4
5
6
7
8
9
10